## Europäisches Patentamt

## European Patent Office

## Office européen des brevets

(11) Veröffentlichungsnummer: **0 136 397**
**B1**

(12) # EUROPÄISCHE PATENTSCHRIFT

(45) Veröffentlichungstag der Patentschrift:
**15.02.89**

(51) Int. Cl.⁴: **C 01 B 33/32, B 01 J 13/02**

(21) Anmeldenummer: **84104141.1**

(22) Anmeldetag: **12.04.84**

(54) **Verfahren zur Herstellung von aufblähbaren, kugelförmigen Hohlkörpern aus verfestigten Alkalimetallsilikatlösungen.**

(30) Priorität: **20.04.83 DE 3314259**

(43) Veröffentlichungstag der Anmeldung:
**10.04.85 Patentblatt 85/15**

(45) Bekanntmachung des Hinweises auf die Patenterteilung:
**15.02.89 Patentblatt 89/7**

(84) Benannte Vertragsstaaten:
**AT BE CH DE FR GB IT LI NL SE**

(56) Entgegenhaltungen:
**WO-A-83/01068**
**DE-A-1 961 971**
**DE-A-2 520 220**
**US-A-2 284 248**

(73) Patentinhaber: **Henkel Kommanditgesellschaft auf Aktien, Postfach 1100 Henkelstrasse 67, D-4000 Düsseldorf- Holthausen (DE)**

(72) Erfinder: **Wichelhaus, Winfried, Dr., Stifterstrasse 3, D-4020 Mettmann (DE)**
Erfinder: **Schröder, Christine, Hermann- vom- Endt- Strasse 3, D-4000 Düsseldorf 13 (DE)**

**Beschreibung**

Gegenstand der vorliegenden Erfindung ist ein Verfahren zur Herstellung von aufblähbaren, kugelförmigen Hohlkörpern aus verfestigten Alkalimetallsilikatlösungen wobei man eine Alkalimetallsilikatlösung tropfenweise in eine Härterlösung einträgt.

Unter verfestigten Alkalimetallsilikatlösungen werden Produkte verstanden, die bei der Umsetzung von Alkalimetallsilikatlösungen mit sogenannten Härtern entstehen. Bekannte Härter sind insbesondere Carbonsäuren und deren Derivate, wie die entsprechenden Ester, Chloride und Amide. Weiterhin sind zu nennen: Ammoniumsalze und Salze von mehrwertigen Metallen, Mineralsäuren und deren saure Salze sowie Hexafluorosilikate.

Der Vorgang der Verfestigung kann durch die Wahl der Härter gesteuert werden. Langsam ablaufende Reaktionen werden vor allem mit den Carbonsäurederivaten und mit Hexafluorosilikaten erzielt. Eine rasche Verfestigung tritt ein bei Anwendung von Mineralsäuren und Salzen mehrwertiger Metalle.

Diese Verfahren sind in der Literatur wiederholt beschrieben. Auch hat man schon auf diesem Wege Schaumkörper aus Wasserglas oder poröse granulathaltige Körper, die wegen ihrer geringen Dichte als Füll- und Isolierstoffe von Interesse sind, hergestellt.

Gegenstand der DE-A-2 520 220 ist ein Verfahren zur Herstellung von silikatischen Schaumstoffpartikeln, die sich durch eine feinzellige Porenstruktur auszeichnen und demzufolge eine hohe mechanische Festigkeit aufweisen. Hierbei werden aus einer wäßrigen Alkalimetallsilikatlösung Tropfen erzeugt, diese vorgeformten Tropfen in einem Fällbad zu Treibmittel enthaltenden Gelpartikeln verfestigt und die so entstandenen festen treibmittelhaltigen Gelpartikel aufgeschäumt. Als Fällbad kommen anorganische und organische Geliermittel, insbesondere wasserlösliche Salze von zwei- oder mehrwertigen Kationen beziehungsweise organische Lösungsmittel, anorganische oder organische Säuren oder Gemische derartiger Geliermittel in Frage. Als Treibmittel dient vorzugsweise Wasser. Die günstigsten Schäumtemperaturen liegen vorzugsweise über 200°C, beispielsweise bei 250 bis 300°C.

In der DE-A-1 961 971 wird ein Verfahren zur Herstellung eines kristallwasserhaltigen blähbaren Granulats beschrieben, wobei man eine wäßrige Lösung mindestens eines Salzes eines zwei- oder dreiwertigen Metalles mit einer wäßrigen Silikatlösung zusammenbringt. Dieser Fällvorgang wird beispielsweise bei 80°C vorgenommen. Anschließend spült man das erhaltene Granulat mit Wasser und trocknet es langsam. Das getrocknete Granulat kann nun unmittelbar auf ein Blähmaterial weiterverarbeitet werden. Hierbei erhitzt man das Granulat auf mindestens 400°C, wobei harte, schaumartige Silikatkugeln entstehen.

Gemäß der US-A-2 284 248 erhält man feste, unterschiedlich geformte Partikel aus Alkalimetallsilikaten. Bei dem hier beschriebenen Verfahren wird eine konzentrierte wäßrige Alkalimetallsilikatlösung in ein dehydratisierendes Fällbad - insbesondere in eine konzentrierte wäßrige Elektrolytlösung oder eine organische Flüssigkeit - vorzugsweise bei Raumtemperatur eingetropft.

Nach dem Fällvorgang verbleiben die gebildeten Partikel längere Zeit im Fällbad, werden dann abgetrennt und an der Luft getrocknet. Sofern erwünscht, können die erhaltenen Produkte noch einer Temperaturbehandlung im Bereich von 300 bis 400°C unterzogen werden.

Die Aufgabe der vorliegenden Erfindung ist es demgegenüber, ein Verfahren zur Herstellung von aufblähbaren, kugelförmigen Hohlkörpern aus verfestigten Alkalimetallsilikatlösungen zu entwickeln.

Gegenstand der Erfindung ist dementsprechend ein Verfahren zur Herstellung von aufblähbaren, kugelförmigen Hohlkörpern aus Alkalimetallsilikaten und Härtern, wobei man eine Alkalimetallsilikatlösung tropfenweise in eine Härterlösung einträgt, welches dadurch gekennzeichnet ist, daß man

a) die Dichte der Alkalimetallsilikatlösung zur Dichte der Härterlösung auf ein Verhältnis im Bereich von (1,02 bis 1,2) : 1 einstellt,

b) anschließend das erhaltene Produkt in der verwendeten oder einer anderen, siedenden Härterlösung einer thermischen Behandlung im Temperaturbereich von 103 bis 120°C unterwirft und

c) die gebildeten Hohlkugeln aus der Lösung abtrennt.

Vorzugsweise wird die thermische Behandlung in einer siedenden Härterlösung im Temperaturbereich von 110 bis 115°C vorgenommen.

Es hat sich als vorteilhaft erwiesen, so zu arbeiten, daß die Dichte der Alkalimetallsilikatlösung zur Dichte der Härterlösung vorzugsweise zwischen 1,02 und 1,1 liegt. Als Alkalimetallsilikate kommen Natrium-, Kalium- oder Lithiumsilikate in Betracht. Auch können Gemische aus Alkalimetallsilikatlösungen Verwendung finden. Insbesondere werden Produkte verwendet, deren Gehalt an $SiO_2$ in der Alkalimetallsilikatlösung 25 bis 34 Gewichtsprozent beträgt.

Der Außendurchmesser der nach dem obigen Verfahren beschriebenen Hohlkugeln wird durch die Tropfengröße bestimmt, das heißt innerhalb kleiner Abweichungen ist der Durchmesser der Hohlkugel identisch mit dem des Tropfens, aus dem diese erzeugt wurde. Die Abweichungen resultieren vor allem aus der Form der Tropfen. Exaktere Vergleichsgrößen sind demnach die Volumina (Kugelvolumen und Tropfenvolumen).

Es lassen sich ohne Schwierigkeiten Hohlkugeln von 1 bis 5 mm Außendurchmesser herstellen. Die Wandstärke der kugelförmigen Hohlkörper werden bevorzugt durch den Silikatgehalt der Alkalimetallsilikatbildung reguliert. Mit handelsüblichen Alkalimetallsilikatlösungen (Wasserglaslösungen) werden Wandstärken von 0,2 bis 0,6 mm erhalten. Bei Verwendung modifizierter Alkalimetallsilikatlösungen sind auch andere Werte einstellbar. Die obere Grenze des $SiO_2$-Gehaltes wird im übrigen in erster Linie durch die Viskosität bestimmt. Für das vorliegende Verfahren kommen insbesondere Viskositätsbereiche zwischen 50 und 2 500 mPa.s in Betracht. Bezüglich der Grenzen für die Konzentration der Härterlösung müssen die beiden Stufen des Herstellungsprozesses getrennt betrachtet werden. Bei der ersten Stufe der Tropfenbildung und Stabilisierung kommt es darauf an, das neben der härtenden Wirkung die Härterlösung eine hohe Dichte aufweist, die nur wenig geringer als die Dichte der Alkalimetallsilikatlösung sein sollte. Es werden daher Lösungen verwendet, bei denen die Dichte der Alkalimetallsilikatlösung zur Dichte der Härterlösung in dem bereits angegebenen Bereich zwischen 1,02 und 1,2, vorzugsweise 1,02 bis 1,1, liegen.

Bei großen Tropfen sind kleine Werte für das Dichteverhältnis von Vorteil, da so eine Deformation des Tropfens vermieden werden kann. Kleine Tropfen sind leichter zu stabilisieren und können demnach auch bei größeren Dichteunterschieden erhalten werden. Die notwendigen Dichten werden durch hohe Salzkonzentrationen in den Härterlösungen erreicht. Für die Härtung selbst sind diese Konzentrationen stets ausreichend.

Die zweite Stufe, die Verfestigung der Hohlkugelbildung, erfordert neben der härtenden Wirkung der Lösung auch, daß diese einen genügend hohen Siedepunkt hat. Eine ausreichende Siedepunkterhöhung wird insbesondere bei hohen Salzkonzentrationen erzielt. Der Siedepunkt der Lösungen sollte demgemäß zwischen 103 und 120°C liegen, vorzugsweise im Bereich von 110 bis 115°C.

Das Volumenverhältnis Härterlösung : Alkalimetallsilikatlösung muß für die erste Stufe so gewählt werden, daß am Ende des Eintropfens die Tropfen noch vollständig von der Härterlösung benetzt werden. Daher kommen insbesondere auch Verhältnisse ab etwa 1 : 1 in Betracht.

In der zweiten Stufe ist die gleichmäßige Benetzung ebenfalls eine wichtige Voraussetzung für die Verfestigung. Die Benetzung kann durch das Aufschwimmen der Hohlkugeln erschwert werden. In einem solchen Falle sollte die auf der Härterlösung schwimmende Hohlkugelschicht im Mittel nicht dicker als eine Dreierschicht sein. Unter diesen Bedingungen ist gewährleistet, daß beim Sieden ein ständiger Platzwechsel erfolgt und jede Kugel ausreichend benetzt wird. Um ein günstiges Volumenverhältnis Härterlösung : Hohlkugeln zu erzielen, ist eine große Oberfläche der Härterlösung erforderlich. Bei der Verwendung weiter Gefäße und geringer Füllhöhe sollte die untere Grenze des Volumenverhältnisses Härterlösung : Alkalimetallsilikatlösung bei etwa 2 : 1 liegen. Durch technische Maßnahmen, wie zum Beispiel mechanisches Umwälzen der Hohlkugeln, kann eine ausreichende Härtung auch unter anderen Volumenverhältnissen erreicht werden.

Da während der Verfestigung der Hohlkugeln aus diesen $Na_2O$ an die Härterlösung abgegeben wird und diese damit im pH-Wert steigt, ist insbesondere bei kleinen Werten der oben genannten Volumenverhältnisse die Zugabe von Säuren erforderlich. Dabei sollte ein Bereich von pH 4 bis pH 10 eingehalten werden.

Als Härterlösungen haben sich wäßrige Lösungen von Calciumsalzen, wie insbesondere Calciumchlorid und -nitrat bewährt. Im Sinne der Erfindung sind Härterlösungen, die Calciumchlorid enthalten, bevorzugt. Diese können sowohl in der ersten als auch in der zweiten Verfahrensstufe Verwendung finden. Gegebenenfalls kommen aber auch andere Verbindungen in Betracht, wie aus den nachstehenden Beispielen beziehungsweise der Tabelle 1 hervorgeht. Somit ist es bei einer Ausführungsform des erfindungsgemäßen Verfahrens bevorzugt, in der thermischen Behandlungslösung der zweiten Verfahrensstufe einen anderen Härter als in der ersten Verfahrensstufe zu verwenden. Als weitere Härterlösungen sind solche bevorzugt, die niedere Carbonsäuren, vorzugsweise Essigsäure, oder deren Derivate enthalten.

Die Modifizierung der Stufe 2 des beanspruchten Verfahrens kann nicht nur darin liegen, daß unterschiedliche Verbindungen als Härter Verwendung finden, sondern es kann auch die Konzentration, beispielsweise des Calciumchlorids, in der ersten und zweiten Verfahrensstufe unterschiedlich sein.

Praktisch verläuft die Bildung des kugelförmigen Hohlkörpers über mehrere Zwischenstufen, da zunächst die Oberflächenhaut stabilisiert wird und als Zwischenprodukt mit flüssigem Wasserglas gefüllte Kugeln sich bilden. Durch Aufheizen der Lösungen im Siedebereich wird das Aushärten beschleunigt und nach hinreichend langer Erwärmung die Hohlkugeln vollständig verfestigt.

Kennzeichnend für das erfindungsgemäße Verfahren ist die Zunahme des $SiO_2 : M_2O$-Verhältnisses ($M_2O$ = Alkalimetalloxid) in den verfestigten Hohlkugeln im Vegleich zur eingesetzten Alkalimetallsilikatlösung. Wie das Beispiel 2 erläutert, werden bei der Verwendung von Natronwasserglas mit einem Gewichtsverhältnis $SiO_2 : Na_2O$ von 3,4 Hohlkugeln mit einem Gewichtsverhältnis $SiO_2 : Na_2O$ von 5,2 erhalten. Es können jedoch auch andere Gewichtsverhältnisse eingestellt werden. Wichtige Einflußgrößen sind dabei das $SiO_2 : Na_2O$-Verhältnis der eingesetzten Alkalimetallsilikatlösung, die Dauer der thermischen Behandlung und der pH-Wert der Härterlösung. So erlaubt das erfindungsgemäße Verfahren die Herstellung von Hohlkugeln, die hinsichtlich der Hauptbestandteile wie folgt zusammengesetzt sind: (in Gewichtsprozent) $SiO_2$ : 55 bis 75, $M_2O$ : 10 bis 15, $H_2O$ : 10 bis 30.

Kugelförmige Hohlkörper, die beim erfindungsgemäßen Verfahren anfallen, lassen sich beispielsweise durch folgende Merkmale kennzeichnen: Produkte der allgemeinen Formel $M_2O$ .x $SiO_2$, wobei $M_2O$ Natrium- oder Kaliumoxid bedeutet und x einen Wert größer als 3,6 und kleiner als 12 darstellt; der Außendurchmesser der Hohlkörper beträgt 1 bis 5 mm und die Dicke der Kugelschalen 0,2 bis 0,6 mm; der Wassergehalt beträgt 10 bis 30 Gewichtsprozent und der Feststoffgehalt mindestens 70 Gewichtsprozent; die Kugelschalen weisen im inneren Bereich einen höheren Gehalt an $M_2O$ auf als im äußeren Bereich.

Wie Elementverteilungsbilder, die im Rasterelektronenmikroskop mit Hilfe von Röntgenfluoreszenzmethoden gewonnen werden, nachweisen, ist das Alkalimetalloxid nicht gleichmäßig in der Kugelschale der Hohlkörper verteilt. Vielmehr nimmt der $M_2O$-Gehalt stets von innen nach außen ab. In welchem Maß die Verarmung an $M_2O$ in der äußeren Schicht der Kugelschale erfolgt, hängt von der Behandlung in der Härterlösung ab. Bei längerem Erhitzen in sauren Härterlösungen werden Hohlkugeln erhalten, deren Oberflächenschicht frei von $M_2O$ ist. Die so behandelten Hohlkugeln zeigen eine gute Resistenz gegen Feuchtigkeit.

Weiterhin empfiehlt sich die Verwendung der nach dem erfindungsgemäßen Verfahren erhaltenen kugelförmigen Hohlkörper überall dort, wo eine geschlossene Kugel mit geringer Dichte anstelle von kompaktem verfestigtem Wasserglas oder porösem Schaumgranulat gefragt ist. Typische Anwendungsbereiche sind beispielsweise das gleichmäßige Verfüllen von engen Hohlräumen und das Abdecken von Flüssigkeiten durch schwimmfähige gegebenenfalls oberflächenaktive silicatische Materialien.

Während die erfindungsgemäße Arbeitsweise eine Vielfalt von Modifizierungsmöglichkeiten hinsichtlich der Härter und der thermischen Nachbehandlung ermöglicht, so können auch geblähte Produkte leicht hergestellt werden. Für die Herstellung dieser geblähten Kugeln eignen sich Verfahren, die den Wassergehalt des verfestigten Alkalimetallsilikats als Gasspender für den Blähvorgang nutzen. Ein hierfür geeignetes Verfahren ist beispielsweise das kurzzeitige Erhitzen auf Temperaturen von 200 bis 400°C. Das Verfahren kann auch dahingehend variiert werden, daß ein Zusatz von modifizierenden Stoffen, wie Säuren, Salzlösungen oder Dispersionen, erfolgt, indem die erfindungsgemäß gewonnenen kugelförmige Hohlkörper vor dem Blähprozeß mit einer oder mehreren modifizierenden Komponenten benetzt beziehungsweise umhüllt werden. Da die Form und die Dimensionen des Hohlkörpers das Aufbringen des modifizierenden Stoffes begünstigen, kann ohne großen technischen Aufwand eine ausgezeichnete gleichmäßige Verteilung des modifizierenden Stoffes auf der Oberfläche der Hohlkörper erzielt werden. Die Vorteile gegenüber anderen Ausgangsformen bestehen im übrigen darin, daß beim Blähprozeß die Kugelform unverändert erhalten bleibt und alle Kugeln etwa die gleiche Ausdehnung erfahren. Das Endprodukt weist im übrigen ein sehr geringes Schüttgewicht auf.

Der Anmeldungsgegenstand wird noch durch die nachstehenden Beispiele erläutert, ohne hierauf beschränkt zu sein.

**Beispiel 1**

931 g $CaCl_2 \cdot 6 H_2O$ und 176 g NaCl wurden in 2,5 l Wasser gelöst. In diese Lösung wurden innerhalb von 10 Minuten 100 ml einer Wasserglaslösung eingetropft, die 8,2 Gewichtsprozent $Na_2O$ und 26,9 Gewichtsprozent $SiO_2$ enthielt. Die Lösung wurde anschließend zum Sieden erhitzt. Nach 30 Minuten wurden die auf der Lösung schwimmenden Hohlkugeln mit einem Sieb abgeschöpft und mit Wasser gewaschen.

Die erhaltenen Kugeln hatten eine harte Schale mit einer rauhen Oberfläche. Der Kugeldurchmesser betrug im Mittel 3,5 mm, die Wandstärke der Schale circa 0,5 mm. Das Innere der Kugel war frei von Wasserglaslösung.

**Beispiel 2**

In einem Becherglas wurden 400 ml einer 4 m $CaCl_2$-Lösung vorgelegt, zu der 40 ml einer handelsüblichen Wasserglaslösung mit circa 27 Gewichtsprozent $SiO_2$ und circa 8 Gewichtsprozent $Na_2O$ getropft wurde. Die Lösung wurde in 10 Minuten zum Sieden erhitzt und 35 Minuten lang auf Siedetemperatur gehalten. Danach wurde abfiltriert und gewaschen. Die Analyse der lufttrockenen Hohlkugeln ergab für die Bestandteile folgende Werte in Gewichtsprozent: $SiO_2$ = 68,7; $Na_2O$ = 13,2; CaO = 1; NaCl = 0,7; $H_2O$ = 17,3.

**Beispiel 3**

In ein Becherglas mit einem Siebeinsatz, das mit 200 ml einer 4,1 m $CaCl_2$-Lösung gefüllt war, wurden aus einer Pipette 20 ml einer Wasserglaslösung getropft, die 350 g $SiO_2$/l enthielt und ein Molverhältnis von $SiO_2/lNa_2O$ = 3,46 aufwies. Auf dem Boden des Siebeinsatzes sammelten sich die Tropfen mit einer stabilisierenden Oberflächenhaut. Die Tropfen wurden mit Hilfe des Siebeinsatzes in ein zweites Becherglas gebracht, das 200 ml einer Lösung aus 1,7 Mol $CaCl_2$ und 1,2 Mol NaCl pro Liter enthielt, und dort 30 Minuten lang gekocht. Es bildeten sich harte Kugeln, die mit dem Siebeinsatz der Lösung entnommen und mit Wasser gewaschen wurden. Nach dem Trocknen bei 120°C blieben 12,3 g Hohlkugeln zurück.

4

**Beispiel 4**

In den nachstehenden Tabellen 1 bis 3 werden einzelne Variationsmöglichkeiten hinsichtlich der Alkalimetallsilikatlösungen und der Härterlösungen aufgezeigt. Bei den in der Tabelle 1 aufgeführten Versuchen wurden Natriumsilikatlösungen handelsüblicher Art unter der Typenbezeichnung 37/40 verwendet. Die Natriumsilikatlösungen hatten eine Dichte (g/cm$^3$) von 1,35 und einen Viskositätsbereich von 50 bis 100 mPa.s sowie einen Feststoffgehalt von 26,9 Gewichtsprozent $SiO_2$ und 8 Gewichtsprozent $Na_2O$. Im ersten Teilschritt des Verfahrens - soweit nichts anderes angegeben ist - wurden stets 100 ml 4,1 m $CaCl_2$-Lösung als Härterlösung 1 vorgelegt. Zu dieser wurden dann 10 ml der jeweiligen Wasserglaslösung zugetropft. Die Siedezeit bei der thermischen Nachbehandlung in der Härterlösung 2 betrug 30 Minuten. In der Tabelle 1 sind unter "Härterlösung Stufe 1" die Zusammensetzung der Härterlösung sowie die Dichte und die Arbeitstemperatur angegeben. Die Spalte "Härterlösung Stufe 2" zeigt die dortige Arbeitsweise an. Dabei wurde angegeben, ob die gleichen oder auch andere Härter wie in Stufe 1 verwendet wurden. Schließlich sind in der Tabelle 1, rechte Spalte Angaben über den Außendurchmesser sowie die Oberflächenqualität der Hohlkugeln aufgenommen.

Bei den in Tabelle 2 angeführten Versuchen 9 bis 11 wurden Natriumsilikatlösungen verwendet, die einen Feststoffgehalt von 22,3 Gewichtsprozent $SiO_2$ und 5,8 Gewichtsprozent $Na_2O$ bei einer Dichte von 1,26 und einen Viskositätsbereich von 10 bis 30 mPa.s aufwiesen. Bei dem Versuch 9 ist die Dichte der Härterlösung 1 (1,32) größer als die Dichte der Alkalimetallsilikatlösung (1,26). Es erfolgte keine Kugelbildung. Hingegen kann man bei entsprechend abgeänderten Bedingungen, wie die Versuche 10 und 11 zeigen, zu den erwünschten Produkten gelangen.

**Beispiel 5**

300 ml einer 4 m $Ca(NO_3)_2$-Lösung wurden wenige Tropfen einer Tensidlösung zugesetzt. In diese Härterlösung wurden 30 ml der in Beispiel 2 verwendeten Wasserglaslösung eingetropft. Die Lösung wurde erhitzt und nach einer Siedezeit von 20 Minuten mit 30 ml einer 2 m Essigsäure versetzt. Anschließend wurde 15 Minuten lang gekocht.

Es bildeten sich sehr harte Hohlkugeln mit einer Platten Oberfläche.

**Beispiel 6**

Es wurde wie im vorhergenannten Beispiel 5 verfahren, mit dem Unterschied, daß die Zugabe der Essigsäure schon nach 5 Minuten Siedezeit erfolgte. Unter diesen Bedingungen entstanden wiederum sehr harte Hohlkugeln, die etwa zur Hälfte noch mit Wasserglaslösung gefüllt waren.

**Beispiel 7**

Es wurde wie im Beispiel 2 verfahren, jedoch mit einer auf 15 Minuten verkürzten Siedezeit. Die Hohlkugeln wurden dann mit einem Sieb abgeschöpft und bei 120° C in einem Glycerinbad dem 10 % Wasser zugesetzt war, 5 Minuten lang getempert. Das Volumen der Hohlkugeln nahm bei dieser thermischen Behandlung um circa 50 % zu.

**Beispiel 8**

In 0,7 l einer 4 m $CaCl_2$-Lösung wurden 0,2 l der in Beispiel 3 verwendeten Wasserglaslösung bei Raumtemperatur zugetropft. Die Lösung wurde erhitzt und anschließend 30 Minuten lang auf Siedetemperatur gehalten. Danach wurden die Hohlkugeln abfiltriert, gewaschen und an der Luft getrocknet. Die Ausbeute betrug 130 g. Die Hohlkugeln hatten einen mittleren Durchmesser von 3,5 mm, Wandstärken zwischen 0,4 und 0,6 mm und eine Schüttdichte von 0,54 g/cm$^3$.

Die Hohlkugeln wurden verschiedenen Blähprozessen unterworfen. Die Ergebnisse sind in Tabelle 4 aufgelistet. In der Reihe a) bis c) wurden die Hohlkugeln bei 300, 400 und 600° C 15 Minuten lang getempert. Es bildeten sich kugelförmige Schaumkörper mit lockerer, teilweise poröser Oberfläche.

Die Beispiele d) bis h) erläutern den Zusatz von modifizierenden Stoffen. Sie wurden hinsichtlich Zusammensetzung und Menge variiert. Das Aufbringen der modifizierenden Stoffe erfolgte unter ständigem Umwälzen der Hohlkugeln, so daß eine gleichmäßige Umhüllung gewährleistet war. Die Hohlkugeln wurden in weiten Schalen in einen vorgeheizten Ofen gebracht und 15 Minuten lang getempert. Als Blähprodukte

5

entstanden wiederum kugelförmige Schaumkörper, jedoch mit dichter Oberfläche und hoher Festigkeit. Sie sind wasserbeständig und schwimmfähig.

**Tabelle 1**

| Lfd. Nr. | Härterlösung Stufe 1 Zusammensetzung (mol/l) | Dichte (g/cm³) | T (°C) | Härterlösung Stufe 2 Zusammensetzung (mol/l) | T (°C) | Hohlkugeln Außen-Ø (mm) | Oberfläche |
|---|---|---|---|---|---|---|---|
| 1 | $CaCl_2$; 4,1 | 1,33 | 25 | wie Stufe 1 | 114 | 1,2 - 1,5 | glatt |
| 2 | $CaCl_2$; 4,1 | 1,33 | 25 | wie Stufe 1 | 114 | 2,0 - 2,1 | glatt |
| 3 | $CaCl_2$; 4,1 | 1,33 | 70 | wie Stufe 1 | 114 | 2,5 - 2,7 | glatt |
| 4 | $CaCl_2$; 4,1 | 1,33 | 25 | $NaHCO_3$; 8,6 | 102 | 3,3 - 3,5 | porös |
| 5 | $BaCl_2$; 1,5 | 1,26 | 25 | $CaCl_2$; 4,1 | 114 | 3,0 - 3,2 | glatt |
| 6 | $MgCl_2$; 4,0 | 1,28 | 25 | wie Stufe 1 | 103 | 2,9 - 3,0 | porös |
| 7 | $Co(NO_3)_2$; 2,0 | 1,22 | 25 | wie Stufe 1 | 103 | 3,0 - 3,3 | rauh |
| 8 | $CaCl_2$; 2,0 $MgCl_2$; 1,0 | 1,11 | 25 | $CaCl_2$; 4,1 | 114 | 3,3 - 3,5 | rauh |

**Tabelle 2**

| Lfd. Nr. | Härterlösung Stufe 1 Zusammensetzung (mol/l) | Dichte (g/cm³) | T (°C) | Härterlösung Stufe 2 Zusammensetzung (mol/l) | T (°C) | Ergebnis |
|---|---|---|---|---|---|---|
| 9 | $CaCl_2$; 4,0 | 1,32 | 25 | wie Stufe 1 | 114 | keine Kugelbildung |
| 10 | $CaCl_2$; 3,2 | 1,22 | 25 | wie Stufe 1 | 113 | Kugelbildung |
| 11 | $CaCl_2$; 2,0 | 1,14 | 25 | wie Stufe 1 | 108 | Kugelbildung |

**Tabelle 3**

| Lfd. Nr. | Alkalimetallsilikatlösung $SiO_2$ | $M_2O$ | Härterlösung Stufe 2 | Eigenschaften des kugelförmigen Hohlkörpers |
|---|---|---|---|---|
| a) | 27 Gew.-% | $Na_2O$ 8 Gew.-% | 100 ml 13 %-ige NaCl-Lsg. + 10 ml Malonsäurediethylester | rauhe Oberfläche, geringe Festigkeit |
| b) | 23,7 Gew.-% | $K_2O$ 10,7 Gew.-% | 100 ml $H_2O$ + 37 g $CaCl_2 \cdot 6 H_2O$ + 7 g NaCl | rauhe Oberfläche, mittlere Festigkeit, Wandstärke ca. 0,2 - 0,4 mm |
| c) | 20,4 Gew.-% | $K_2O$ 7,8 Gew.-% $Li_2O$ 1,4 Gew.-% | - " - | - " - |
| d) | 27 Gew.-% | $Na_2O$ 8 Gew.-% | 100 ml 4 m $CaCl_2$-Lsg. + 5 ml 2 m Essigsäure | glatte Oberfläche, hohe Festigkeit |
| e) | 23 Gew.-% | $Na_2O$ 6,8 Gew.-% | - " - | glatte Oberfläche, mittlere Festigkeit, Wandstärke ca. 0,2 - 0,4 mm |

**Tabelle 4**

| Lfd. Nr. | Mengenverhältnisse Hohlkugeln | Modifizierender Stoff | Blähtemperatur | Durchmesser | Blähprodukt Schüttdichte | Oberfläche |
|---|---|---|---|---|---|---|
| a) | 3 g | - | 300°C | 5 - 6 mm | 0,08 g/cm³ | locker, porös |
| b) | 3 g | - | 400°C | 6 mm | 0,07 g/cm³ | |
| c) | 3 g | - | 600°C | 6 - 7 mm | 0,06 cm³ | . |
| d) | 30 g | 5 ml $H_3PO_4$ (85ig) | 300°C | 4,6 - 5,1 mm | 0,20 g/cm³ | fest, geschlossen |
| e) | 20 g | 1 ml - " - | 400°C | 5,1 - 5,4 mm | 0,17 g/cm³ | |
| f) | 3 g | 0,3 ml - " - | 300°C | 4,5 - 4,7 mm | 0,18 cm³ | |
| g) | 5 g | 0,6 g $H_3PO_4$ (85ig) + 0,6 g $CaHPO_4 \cdot 2 H_2O$ + 1,0 g $H_2O$ | 300°C | 5 - 6 mm | 0,15 g/cm³ | fest, geschlossen |
| h) | 10 g | 1,7 g $MgCl_2 \cdot 6 H_2O$ + 1,3 g $H_2O$ | 300°C | 4,5 - 5,5 mm | 0,16 g/cm³ | |

# EP 0 136 397 B1

## Patentansprüche

1. Verfahren zur Herstellung von aufblähbaren kugelförmigen Hohlkörpern aus Alkalimetallsilikaten und Härtern, wobei man eine Alkalimetallsilikatlösung tropfenweise in eine Härterlösung einträgt, dadurch gekennzeichnet, daß man

a) die Dichte der Alkalimetallsilikatlösung zur Dichte der Härterlösung auf ein Verhältnis im Bereich von (1,02 bis 1,2) : 1 einstellt,

b) anschließend das erhaltene Produkt in der verwendeten oder einer anderen, siedenden Härterlösung einer thermischen Behandlung im Temperaturbereich von 103 bis 120°C unterwirft und

c) die gebildeten Hohlkugeln aus der Lösung abtrennt.

2. Verfahren nach Anspruch 1, dadurch gekennzechnet, daß man die Dichte der Alkalimetallsilikatlösung zur Dichte der Härterlösung auf ein Verhältnis im Bereich von (1,02 bis 1,1) : 1 einstellt.

3. Verfahren nach Anspruch 1, dadurch gekennzeichnet, daß die thermische Behandlung bei Temperaturen von 110 bis 115°C erfolgt.

4. Verfahren nach Ansprüchen 1 bis 3, dadurch gekennzeichnet, daß die Härter in den thermischen Behandlungslösungen verschieden sind.

5. Verfahren nach Ansprüchen 1 bis 4, dadurch gekennzeichnet, daß die Härterlösungen wasserlösliche Calciumsalze enthalten.

6. Verfahren nach Anspruch 5, dadurch gekennzeichnet, daß die Härterlösungen Calciumchlorid enthalten.

7. Verfahren nach Ansprüchen 1 bis 6, dadurch gekennzeichnet, daß die Härterlösungen niedere Carbonsäuren oder deren Derivate enthalten.

8. Verfahren nach Anspruch 7, dadurch gekennzeichnet, daß die Härterlösungen Essigsäure enthalten.

9. Verfahren nach Ansprüchen 1 bis 8, dadurch gekennzeichnet, daß der pH-Wert der Härterlösungen bei Zusatz der Alkalimetallsilikatlösungen durch Säurezusatz im Bereich von 4 bis 10 gehalten wird.

## Claims

1. A process for the production of expandable, spherical hollow bodies of alkali metal silicates and hardeners, in which an alkali metal silicate solution is added dropwise to a hardener solution, characterized in that

a) the ratio between the density of the alkali metal silicate solution and the density of the hardener solution is adjusted to a value of (1.02 to 1.2) : 1,

b) the product obtained is then heat-treated at a temperature of 103 to 120°C in the boiling hardener solution used or in another boiling hardener solution and

c) the hollow spheres formed are separated off from the solution.

2. A process as claimed in claim 1, characterized in that the ratio between the density of the alkali metal silicate solution and the density of the hardener solution is adjusted to a value of (1.02 to 1.1) : 1.

3. A process as claimed in claim 1, characterized in that the heat treatment is carried out at temperatures in the range from 110 to 115°C.

4. A process as claimed in claims 1 to 3, characterized in that the hardeners in the heat treatment solutions are different.

5. A process as claimed in claims 1 to 4, characterized in that the hardener solutions contain water-soluble calcium salts.

6. A process as claimed in claim 5, characterized in that the hardener solutions contain calcium chloride.

7. A process as claimed in claims 1 to 6, characterized in that the hardener solutions contain lower carboxylic acids or derivatives thereof.

8. A process as claimed in claim 7, characterized in that the hardener solutions contain acetic acid.

9. A process as claimed in claims 1 to 8, characterized in that, during addition of the alkali metal silicate solution, the pH value of the hardener solutions is kept in the range from pH 4 to pH 10 by the addition of acid.

## Revendications

1. Procédé pour la production de corps creux sphériques aptes à gonfler, à partir de silicates de métaux alcalins et de durcisseurs, caractérisé en ce que:

a) on ajuste la densité de la solution de silicate de métal alcalin, par rapport à la densité de la solution de durcisseur, à une valeur dans la plage de (1,02 à 1,2) : 1.

b) On soumet ensuite le produit obtenu, dans la solution bouillante de durcisseur utilisée ou dans une autre solution bouillante de durcisseur, à un traitement thermique dans la plage de 103 à 120°C, et

c) on sépare hors de la solution les billes creuses formées.

2. Procédé selon la revendication 1, caractérisé en ce que l'on ajuste la densité de la solution de silicate de métal alcalin, par rapport à la densité de la solution de durcisseur, à une valeur dans la plage de (1,02 à 1,1) : 1.

7

3. Procédé selon la revendication 1, caractérisé en ce que le traitement thermique est effectué à des températures de 110 à 115°C.

4. Procédé selon l'une quelconque des revendications 1 à 3, caractérisé en ce que les durcisseurs sont différents dans les solutions de traitement thermique.

5. Procédé selon l'une quelconque des revendications 1 à 4, caractérisé en ce que les solutions de durcisseurs contiennent des sels de calcium solubles dans l'eau.

6. Procédé selon la revendication 5, caractérisé en ce que les solutions de durcisseurs contiennent du chlorure de calcium.

7. Procédé selon l'une quelconque des revendications 1 à 6, caractérisé en ce que les solutions de durcisseurs contiennent des acides carboxyliques inférieurs ou leurs dérivés.

8. Procédé selon la revendication 7, caractérisé en ce que les solutions de durcisseurs contiennent de l'acide acétique.

9. Procédé selon l'une quelconque des revendications 1 à 8, caractérisé en ce que, lors de l'addition des solutions de silicate de métal alcalin, on maintient le pH des solutions de durcisseur dans la plage de 4 à 10, par addition d'acide.